# EUROPÄISCHE PATENTSCHRIFT

(11) **EP 1 797 408 B1**
(45) Veröffentlichungstag und Bekanntmachung des Hinweises auf die Patenterteilung: **20.06.2012**
(21) Anmeldenummer: 05786406.8
(22) Anmeldetag: 05.10.2005
(51) Int. Cl.: G01M 15/10, G01L 23/22, G01L 23/16

(54) **ZÜNDKERZE MIT OPTISCHEM SENSOR**
SPARK PLUG WITH OPTICAL SENSOR
BOUGIE D'ALLUMAGE A CAPTEUR OPTIQUE

(30) Priorität: 06.10.2004 CH 16622004
(43) Veröffentlichungstag der Anmeldung: 20.06.2007
(73) Patentinhaber: Kistler Holding AG, 8408 Winterthur (CH)
(72) Erfinder: KARST, Dieter, CH-8260 Stein am Rhein (CH); VOLLENWEIDER, Kurt, CH-8457 Humlikon (CH); FURTER, Paul, CH-8332 Russikon (CH)
(86) Internationale Anmeldenummer: PCT/CH2005/000580
(87) Internationale Veröffentlichungsnummer: WO 2006/037251

(56) Entgegenhaltungen:
- US-A- 4 419 212
- US-H- H2 034
- MINORU OHSUGA ET AL.: "study on engine combustion analysis" HITACHI REVIEW, Bd. 39, Nr. 5, Oktober 1990 (1990-10), Seiten 299-306, XP000219780 TOKYO, JP

## Beschreibung

### Technisches Gebiet

Die Erfindung betrifft eine Zündkerze mit einem optischen Fenster zum Erfassen von Verbrennungsvorgängen in einem Ottomotor, wobei sich das optische Fenster in der Mittelelektrode der Zündkerze befindet.

### Stand der Technik

Zur Untersuchung des Klopfens während der Verbrennung in einem Ottomotor werden beispielsweise optische Sensoren eingesetzt. Diese messen die Helligkeit im Brennraum und geben so Aufschluss über die zeitliche Abfolge der Geschehnisse während einer Verbrennung. Zu diesem Zweck werden optische Sensoren beispielsweise in Zündkerzen untergebracht. Diese tendieren aber nach kurzer Zeit zu verschmutzen, wodurch vereinzelt optische Sensoren in die Mittelelektrode von Sensoren eingebaut werden. Während der Zündung sind die Oberflächen hohen Temperaturen ausgesetzt, wodurch diese gesäubert werden, da der dort abgelagerte Russ durch die Hitze verbrennt.

Zündkerzen eingangs erwähnter Art sind bekannt. In der DE 3001711 von Robert Bosch GmbH sind verschiedene Ausführungsformen dargelegt, wobei beispielsweise ein Saphirstab verwendet wird oder ein Bündel von Lichtleitern. Nachteilig an diesen Anordnungen ist, dass der Saphirstab einen sehr geringen Öffnungswinkel aufweist und dass das Bündel an Lichtleitern auch nicht den exakten Positionen zugeordnet werden kann.

Zu beachten ist, dass zur Untersuchung des Klopfens die Gebiete flächig um die Zündkerze herum ausgewertet werden müssen.

In der US H 2034 H ist eine Zündkerze mit integriertem optischen Sensor beschrieben, der sich in der Mittelelektrode befindet. Er besteht aus einem Lichtleiterbündel, an den frontseitig zwei Linsen angrenzen, welche durch ein optisches Fenster zum Motorraum abgeschlossen werden. Auch hier ist der Erfassungswinkel gering.

In Minoru Ohsuga et al beschreiben in "Study on Engine Combustion Analysis", Hitacht Review Vol. 39 (1990), No. 5 Seiten 299-306 eine Zündkerze mit integriertem optischen Sensor, der sich in der Mittelelektrode befindet. Er besteht aus einem dünnen Quarzstab, der frontseitig in eine konvex geschliffene Oberfläche aufweist, wodurch Licht bis zu einem Winkel von 120° erfasst werden kann. Es hat sich gezeigt, dass der Quarzstab, der durch die gesamte Zündkerze verläuft, sehr bruchanfällig ist, bedingt durch die Thermospannung, die beim Gebrauch im Motorraum vorherrscht, sowie durch die Torsionsspannung, die beim Ein- und Ausbau vom Kerzenschlüssel her auf die Zündkerze wirkt. Zudem ist der Erfassungswinkel auch hier auf maximal 120° begrenzt.

### Darstellung der Erfindung

Aufgabe der vorliegenden Erfindung ist es, eine Zündkerze mit einem optischen Sensor anzugeben, welcher die Lichtemission flächig um die Zündkerze herum erfassen kann und nach Möglichkeit eine richtungsabhängige Auswertung erlaubt.

Die Aufgabe wird dadurch gelöst, dass das optische Fenster mindestens eine Linse aufweist, welche dem Brennraum ausgesetzt ist, sowie mindestens einen flexiblen Lichtleiter, welcher Licht von der Linse durch die Zündkerze hindurch in ein Auswertesystem leiten kann.

### Kurze Beschreibung der Zeichnungen

Im Folgenden wird die Erfindung unter Beizug der Zeichnungen näher erklärt. Es zeigen
- Fig. 1: eine schematische Darstellung einer erfindungsgemässen Spitze einer Zündkerze;
- Fig. 2: eine alternative Ausführungsform einer schematischen Darstellung einer erfindungsgemässen Spitze einer Zündkerze.

### Wege zur Ausführung der Erfindung

Gleiche Bezeichnungen in den Figuren stehen für dieselben Erläuterungen.

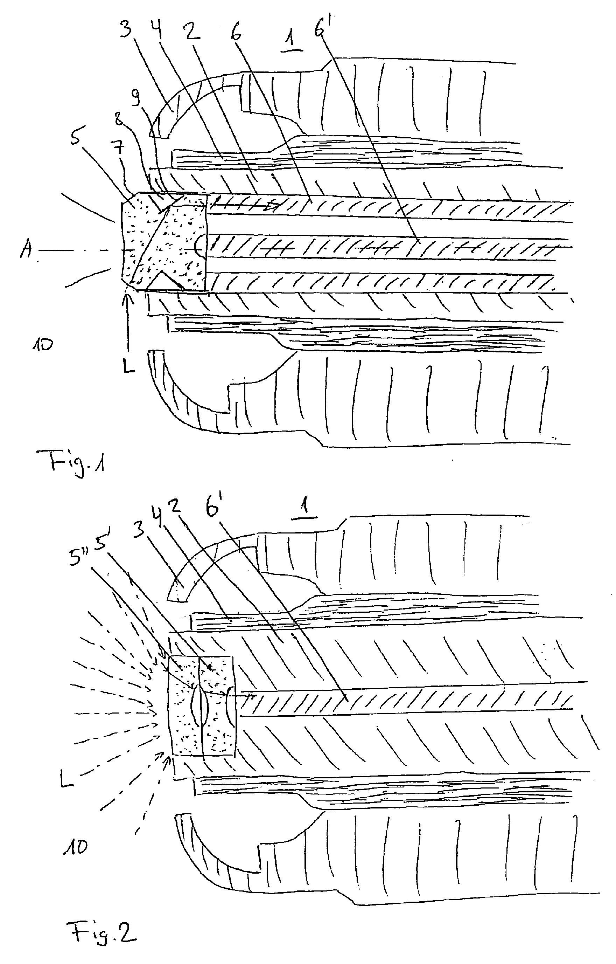

Die Fig. 1 zeigt eine schematische Darstellung einer erfindungsgemässen Spitze einer Zündkerze 1. Diese umfasst eine Mittelelektrode 2 sowie eine Masselektrode 3, wobei diese beiden Elektroden durch einen Isolator 4 voneinander getrennt sind. Bei einem Zündvorgang schlägt ein Funke zwischen den beiden Elektroden. In den hier dargestellten Beispielen sind Gleitfunkenzündkerzen dargestellt. Diese haben den Vorteil, die Sicht des optischen Fensters weniger zu verhindern. Andere Zündkerzen können aber auch verwendet werden.

Der Vorteil ist allerdings, Seriezündkerzen verwenden zu können, da diese viel kostengünstiger in der Herstellung sind als Spezialanfertigungen.

Die Mittelelektrode 2 hat die Gestalt eines Rohres und weist somit eine innere Öffnung auf. Diese Öffnung ist an ihrem dem Brennraum 10 zugewandten Ende mit einer Linse 5 versehen.

Die Achse der Linse 5 verläuft jeweils in Zündkerzenachse.

In der Fig. 1 ist die Linse 5 derart ausgestaltet, dass senkrecht zur Linsenachse eintreffendes Licht L um 90° in die Linse 5 hinein umgelenkt wird. Beim Austritt aus der Linse 5 wird der Lichtstrahl in einen der vielzähligen flexiblen Lichtleiter 6 geleitet, welche angrenzend an die Linse 5 an deren Innenfläche auf einem Kreis angeordnet sind. Somit lässt sich die Lichtintensität ortsabhängig auswerten, da benachbarte Lichtleiter Licht aus anderen Sektoren empfangen.

Eine bevorzugte Ausgestaltung der Linse 5 ist in Fig. 1 dargestellt. Diese Linse weist eine im wesentlichen zylindrische Form auf, wobei die dem Brennraum 10 zugewandte Kante eine Brechungsphase 7 aufweist. An dieser Brechungsphase 7 wird Licht L, welches aus einer Richtung senkrecht zur Achse A auf die Linse 5 auftrifft, auf eine gegenüberliegende Kerbe 8 abgelenkt. Diese Kerbe 8 verläuft ringförmige auf der Mantelfläche des Zylinders. Ihre dem Brennraum 10 abgewandte Phase 9 ist verspiegelt. Der auf diese verspiegelte Phase 9 auftreffende Lichtstrahl wird in die gewünschte Richtung abgelenkt und tritt schliesslich in den Lichtleiter 6 ein. Der Spiegel wird dadurch erreicht, dass die Phase beispielsweise mit Platin oder Gold beschichtet wird. Da diese Schicht nicht direkt dem Brennraum 10 ausgesetzt ist, besteht keine Gefahr einer Beschädigung durch die Verbrennung im Motor.

Zusätzlich lässt sich angrenzend an die Linse an deren Innenfläche mittig ein weiterer Lichtleiter 6' anordnen. Vorteilhafterweise ist die Innenfläche der Linse 5 konkav ausgestaltet.

In der Fig. 2 ist ein Doppellinsensystem dargestellt mit den Linsen 5' und 5".

Dieses Doppellinsensystem besteht aus mindestens einer im wesentlichen plankonkaven Linse 5" und einer doppelkonkaven Linse 5', wobei die plane Seite der plankonkaven Linse 5" dem Brennraum ausgesetzt ist. Der zentrale Lichtleiter 6' schliesst unmittelbar an die Doppelkonkave Linse 5' an. Die Linsen können so ausgestaltet sein, dass ein Erfassungswinkel von dem Doppellinsensystem 5', 5" mindestens 120°, vorzugsweise mindestens 135°, insbesondere bis 140° aufweist.

Diese Anordnung erlaubt ebenfalls eine Erfassung von Lichtstrahlen L, welche aus dem seitlichen Bereich der Zündkerze kommen .

Vorzugsweise werden die Linsen aus Saphir oder Quarzglas hergestellt.

Die Linsen sowie auch die Lichtleiter werden von einer Hülse umgeben, welche die Funktion der Mittelelektrode 2 erfüllen. Diese Hülse besteht Vorteilhafterweise aus Platin oder Gold oder einer Legierung davon.

Der optische Sensor einschliesslich den Linsen und den Lichtleitern sind in der Regel im Durchmesser kleiner als 2mm, meistens zwischen 1.5 und 1.8 mm. Der zentrale Hohlraums der Mittelelektrode 2 muss daher diese Masse aufweisen.

Wichtig für den Anwendungsbereich ist, dass die Zündkerze eine anhaltende Temperaturbelastung von 600 °C und eine kurzzeitige Temperaturbelastung von 900 °C aushält.

Der Vorteil dieser Erfindung besteht darin, dass mit dieser Zündkerze ein Messsystem angeboten werden kann, das einerseits nicht verschmutzt, dank der Anordnung des optischen Fenstern in der Mittelelektrode 2, andererseits aber gezielt in einzelnen Bereichen unterteilt Messdaten erfasst werden können, welche auch einzeln ausgewertet werden können.

Zusätzlich kann durch ein mittig angeordneten Lichtleiter Licht vom gesamten Brennraum aufgenommen werden.

### Bezugszeichenliste

- 1: Zündkerze
- 2: Mittelelektrode
- 3: Masselektrode
- 4: Isolator
- 5: Linse
- 6: Lichtleiter, flexibel
- 7: Brechungsphase
- 8: Kerbe
- 9: Verspiegelte Phase
- 10: Brennraum
- L: Lichteinfall
- A: Achse der Linse sowie der Zündkerze

## Patentansprüche

1. Zündkerze mit einem optischen Fenster zum Erfassen von Verbrennungsvorgängen in einem Ottomotor, wobei sich das optische Fenster in der Mittelelektrode (2) der Zündkerze befindet, wobei das optische Fenster mindestens eine Linse (5) aufweist, welche dem Brennraum (10) ausgesetzt ist, sowie mindestens einen flexiblen Lichtleiter (6), welcher Licht von der Linse (5) durch die Zündkerze hindurch in ein Auswertesystem leiten kann, **dadurch gekennzeichnet, dass** die Achse (A) der Linse (5) in Zündkerzenachse verläuft und dafür vorgesehen ist, senkrecht zur Linsenachse (A) eintreffendes Licht um 90° in die Linse (5) hinein umzulenken, wobei die Linse (5) eine im wesentlichen zylindrische Form aufweist, wobei die dem Brennraum (10) zugewandte Kante eine Brechungsphase (7) aufweist und die Mantelfläche des Zylinders eine ringförmige Kerbe (8) aufweist, deren dem Brennraum (10) abgewandte Phase (9) verspiegelt ist.

2. Zündkerze nach Anspruch 1, **dadurch gekennzeichnet, dass** angrenzend an die Linse (5) an deren Innenfläche eine Vielzahl von Lichtleitern (6) auf einem Kreis angeordnet sind.

3. Zündkerze nach einem der vorhergehenden Ansprüche, **dadurch gekennzeichnet, dass** angrenzend an die Linse (5) an deren Innenfläche mittig ein Lichtleiter (6) angeordnet ist.

4. Zündkerze gemäss Anspruch 3, **dadurch gekennzeichnet, dass** die Innenfläche der Linse (5) konkav ausgestaltet ist.

5. Zündkerze mit einem optischen Fenster zum Erfassen von Verbrennungsvorgängen in einem Ottomotor, wobei sich das optische Fenster in der Mittelelektrode (2) der Zündkerze befindet, wobei das optische Fenster mindestens eine Linse (5', 5") aufweist, welche dem Brennraum (10) ausgesetzt ist, sowie mindestens einen flexiblen Lichtleiter (6), welcher Licht von der Linse (5', 5") durch die Zündkerze hindurch in ein Auswertesystem leiten kann, **dadurch gekennzeichnet, dass** das optische Fenster ein Doppellinsensystem (5', 5") aufweist und dass das Doppellinsensystem (5', 5") aus mindestens einer im wesentlichen plankonkaven Linse (5") und einer doppelkonkaven Linse (5') besteht, wobei die plane Seite der plankonkaven Linse (5") dem Brennraum (10) ausgesetzt ist.

6. Zündkerze gemäss Anspruch 5, **dadurch gekennzeichnet, dass** der Erfassungswinkel des Doppellinsensystems mindestens 120°, vorzugsweise mindestens 135°, insbesondere bis 140° aufweist.

7. Zündkerze gemäss einem der Ansprüche 5 oder 6, **dadurch gekennzeichnet, dass** mindestens eine Linse (5', 5") aus Saphir oder Quarzglas besteht.

8. Zündkerze gemäss einem der vorhergehenden Ansprüche, **dadurch gekennzeichnet, dass** das optische Fenster mit einer Hülse umgeben ist, welche die Funktion der Mittelelektrode (2) erfüllt.

9. Zündkerze gemäss Anspruch 8, **dadurch gekennzeichnet, dass** die Hülse im wesentlichen aus Platin, Gold oder einer Legierung daraus besteht.

10. Zündkerze gemäss einem der vorhergehenden Ansprüche, **dadurch gekennzeichnet, dass** die Zündkerze eine anhaltende Temperaturbelastung von 600 °C und eine kurzzeitige Temperaturbelastung von 900 °C aushält.

11. Zündkerze gemäss einem der vorhergehenden Ansprüche, **dadurch gekennzeichnet, dass** die Zündkerze eine Gleitfunkenzündkerze ist.

12. Zündkerze gemäss einem der vorhergehenden Ansprüche, **dadurch gekennzeichnet, dass** die Zündkerze eine Serienzündkerze ist.

## Claims

1. A spark plug having an optical window for sensing combustion processes in an Otto engine wherein said optical window is located in the central electrode (2) of said spark plug and wherein said optical window has at least one lens (5) that is exposed to the combustion chamber (10) as well as at least one flexible optical fiber (6) capable of conducting light through the spark plug from the lens to an analysis system **characterized in that** the axis (A) of lens (5) extends in the same direction as the spark plug axis and is adapted to redirect by 90° into the lens light that enters the lens (5) from a direction perpendicular to said lens axis (A), wherein said lens (5) is essentially cylindrical in shape and wherein the edge facing the combustion chamber (10) has a refraction phase (7) and the lateral surface area of the cylinder has an annular groove (8) the phase (9) of which that faces away from the combustion chamber (10) bearing a metal coating.

2. A spark plug according to claim 1 **characterized in that** adjacent to the lens (5) and at the inner surface thereof a plurality of optical fibers (6) is arranged on a circle.

3. A spark plug according to any of the preceding claims **characterized in that** adjacent to the lens (5) and at the inner surface thereof an optical fiber (6) is centrally arranged.

4. A spark plug according to claim 3 **characterized in that** the inner surface of the lens (5) is embodied with a concave shape.

5. A spark plug having an optical window for sensing combustion processes in an Otto engine wherein said optical window is located in the central electrode (2) of the spark plug and wherein said optical window has at least one lens (5', 5") that is exposed to the combustion chamber (10) as well as at least one flexible optical fiber (6) capable of conducting light through the spark plug from the lens (5', 5") to an analysis system, **characterized in that** the optical window has a double lens system (5', 5") and that said double lens system (5', 5") consists of at least an essentially plano-concave lens (5") and a biconcave lens (5') the planar face of the plano-concave lens (5") being exposed to the combustion chamber (10).

6. A spark plug according to claim 5 **characterized in that** the detection angle of the double lens system is at least 120°, preferably 135°, in particular up to 140°.

7. A spark plug according to any of the claims 5 or 6 **characterized in that** at least one lens (5', 5") is made from sapphire or quartz glass.

8. A spark plug according to any of the preceding claims **characterized in that** the optical window is surrounded by a sheath functioning as the central electrode (2).

9. A spark plug according to claim 8 **characterized in that** said sheath is essentially made of platinum, gold, or an alloy thereof.

10. A spark plug according to any of the preceding claims **characterized in that** said spark plug can withstand a prolonged temperature load of 600° C as well as a temporary temperature load of 900° C.

11. A spark plug according to any of the preceding claims **characterized in that** said spark plug is an air-surface gap spark plug.

12. A spark plug according to any of the preceding claims **characterized in that** said spark plug is a series spark plug.

## Revendications

1. Une bougie d'allumage ayant une fenêtre optique pour mesurer des processus de combustion dans un moteur à allumage par étincelle dans laquelle ladite fenêtre optique est située dans l'électrode centrale (2) de la bougie d'allumage et ladite fenêtre optique dispose d'au moins une lentille (5) exposée vers la chambre de combustion (10) ainsi qu'au moins un conduit de lumière (6) souple capable de conduire la lumière au travers de la bougie d'allumage de la lentille à un système d'analyse **caractérisée en ce que** l'axe (A) de la lentille (5) suit la direction de l'axe de la bougie d'allumage et est prévu pour changer la direction par 90° vers l'intérieur de la lentille, de la lumière entrant dans la lentille (5) d'une direction perpendiculaire à ledit axe (A) de la lentille, ladite lentille (5) étant essentiellement d'une forme cylindrique et sa arête orientée vers la chambre de combustion (10) présentant une phase de réfraction (7) ainsi que la surface latérale du cylindre portant une rainure annulaire (8) dont la phase (9) détournée de la chambre de combustion (10) porte un revêtement en miroirs.

2. Une bougie d'allumage selon la revendication 1 **caractérisée en ce que** adjacent à la lentille (5) la surface intérieure de laquelle une pluralité de conduits de lumière (6) est arrangée dans un cercle.

3. Une bougie d'allumage selon l'une quelconque des revendications précédentes **caractérisée en ce que** adjacent à la lentille (5) à la surface intérieure de laquelle un conduit de lumière (6) est arrangé centralement.

4. Une bougie d'allumage selon la revendication 3 **caractérisée en ce que** la surface intérieure de la lentille (5) est configurée d'une forme concave.

5. Une bougie d'allumage ayant une fenêtre optique pour mesurer des processus de combustion dans un moteur à allumage par étincelle dans laquelle ladite fenêtre optique est située dans l'électrode centrale (2) de la bougie d'allumage et ladite fenêtre optique dispose d'au moins une lentille (5', 5") exposée vers la chambre de combustion (10) ainsi qu'au moins un conduit de lumière (6) souple capable de conduire la lumière au travers de la bougie d'allumage de la lentille (5', 5") à un système d'analyse **caractérisée en ce que** la fenêtre optique dispose d'un système à double lentille (5', 5") et ledit système à double lentille (5', 5") consiste d'au moins une lentille (5") essentiellement plano-concave et une lentille (5') biconcave, ladite face planaire de la lentille plano-concave (5") étant exposée vers la chambre de combustion (10).

6. Une bougie d'allumage selon la revendication 5 **caractérisée en ce que** l'angle de détection du système à double lentille est au moins 120°, préférentiellement 135°, notamment jusqu'à 140°.

7. Une bougie d'allumage selon l'une des revendications 5 ou 6 **caractérisée en ce qu'**au moins une des lentilles (5', 5") est fabriquée du saphir ou du verre quartzeux.

8. Une bougie d'allumage selon l'une quelconque des revendications précédentes **caractérisée en ce que** la fenêtre optique est entourée par une gaine qui accomplit la fonction de l'électrode centrale (2).

9. Une bougie d'allumage selon la revendication 8 **caractérisée en ce que** ladite gaine est composée essentiellement du platine, d'or ou bien d'un alliage de ces derniers.

10. Une bougie d'allumage selon l'une quelconque des revendications précédentes **caractérisée en ce que** ladite bougie d'allumage est apte à résister une exposition prolongée à une température de 600° C ainsi qu'une exposition temporaire à une température de 900° C.

11. Une bougie d'allumage selon l'une quelconque des revendications précédentes **caractérisée en ce que** ladite bougie d'allumage est une bougie à étincelle glissante.

12. Une bougie d'allumage selon l'une quelconque des revendications précédentes **caractérisée en ce que** ladite bougie d'allumage est une bougie de série.
